# EUROPEAN PATENT APPLICATION

(11) **EP 3 783 470 A1**
(43) Date of publication of application: **24.02.2021**
(21) Application number: 18899024.6
(22) Date of filing: 19.11.2018
(51) Int. Cl.: G06F 3/045

(54) **CONDUCTIVE STRUCTURE AND PREPARATION METHOD THEREOF, TOUCH SCREEN, AND TOUCH DISPLAY DEVICE**

(30) Priority: 18.04.2018 CN 201810347785
(71) Applicant: BOE TECHNOLOGY GROUP CO., LTD., Beijing 100015 (CN)
(72) Inventor: JI, Chunyan, Beijing 100176 (CN)
(74) Representative: Maiwald Patent- und Rechtsanwaltsgesellschaft mbH
(86) International application number: PCT/CN2018/116227
(87) International publication number: WO 2019/200908

(57) **Abstract**

A conductive structure and a manufacturing method thereof, a touch screen and a touch display device are provided. The conductive structure (10) includes a substrate (11); and a conductive layer (12) arranged on the substrate (10); a part of the conductive layer (12) is embedded in the substrate (11). Thus, an embedded overlap region (13) is formed between the conductive layer (12) and the substrate (11). In the embedded overlap region (13), a part of the conductive layer (12) is embedded in the substrate (12), and an outer surface of the conductive layer (12) is exposed to an outer side to realize normal touch function. The embedded overlapping region (13) enables a bonding between the conductive layer (12) and the substrate (11) to be tighter, thereby avoiding the problem that an adhesive layer is easily peeled off the substrate.

## Description

### CROSS REFERENCE TO RELATED APPLICATIONS

The present application claims priority to the Chinese patent application No. 201810347785.8 filed on April 18, 2018, under the title of "conductive structure and manufacturing method thereof, touch screen and touch display device", the entire disclosure of which is incorporated herein by reference as part of the present application.

### TECHNICAL FIELD

The embodiments of the present disclosure relate to a conductive structure and a manufacturing method thereof, a touch screen and a touch display device.

### BACKGROUND

Touch screen is the simplest, convenient and a natural way of human-computer interaction, and at present, there are many products using touch technology, such as mobile phones, MP4 and palmtops, etc. And, there are roughly three kinds of mainstream touch technologies, which are a resistive type, a capacitive type and an infrared type, respectively.

Resistive touch screens have low price and high sensitivity, and have been widely applied to touch screens. Whether a 4-wire resistive touch screen or a 5-wire resistive touch screen, each of them is working in a completely isolated environment relative to an external environment, and will not be disturbed by dust or water vapor, thereby being adaptable to a variety of harsh environments and having a good stability.

Typically, when a resistive touch screen is formed, an adhesive layer may be formed between a substrate and an electrode, and a formation of the adhesive layer would increase process complexity and raise production cost. Moreover, an uneven thickness of the adhesive layer would also cause issues such as inaccurate determination of a touch position and so on.

### SUMMARY

At least one embodiment of the present disclosure relates to a conductive structure, which includes a substrate; and a conductive layer arranged on the substrate; a part of the conductive layer is embedded in the substrate.

For example, in the conductive structure provided by at least one embodiment of the present disclosure, a material of the substrate is nanocellulose with a two-dimensional planar mesh structure.

For example, in the conductive structure provided by at least one embodiment of the present disclosure, a material of the conductive layer is a one-dimensional nanometer conductive material.

For example, in the conductive structure provided by at least one embodiment of the present disclosure, the one-dimensional nanometer conductive material is embedded in the nanocellulose with the two-dimensional planar mesh structure to form an embedded overlap region.

For example, in the conductive structure provided by at least one embodiment of the present disclosure, the substrate is doped with a silver ion.

At least one embodiment of the present disclosure further provides a touch screen, which includes: a first substrate, a first electrode being provided on a side of the first substrate close to the second substrate; and a second substrate opposite to the first substrate, a second electrode being provided on a side of the second substrate close to the first substrate; a part of the first electrode is embedded in the first substrate and/or a part of the second electrode is embedded in the second substrate.

For example, in the touch screen provided by at least one embodiment of the present disclosure, a material of at least one selected from the group consisting of the first substrate and the second substrate is nanocellulose with a two-dimensional planar mesh structure.

For example, in the touch screen provided by at least one embodiment of the present disclosure, a surface of the first substrate away from the second substrate has a convex-convave structure.

For example, in the touch screen provided by at least one embodiment of the present disclosure, a material of at least one selected from the group consisting of the first electrode and the second electrode is a one-dimensional nanometer conductive material.

For example, in the touch screen provided by at least one embodiment of the present disclosure, the one-dimensional conductive material includes at least one selected from the group consisting of a conductive nanowire, a conductive nanotube, and a conductive nanorod.

For example, in the touch screen provided by at least one embodiment of the present disclosure, at least one selected from the group consisting of the first substrate and the second substrate is doped with a silver ion.

For example, in the touch screen provided by at least one embodiment of the present disclosure, a plurality of spacers are arranged between the first substrate and the second substrate.

At least one embodiment of the present disclosure further provides a touch display device, which includes: a display panel; and any one the touch screens as described above.

At least one embodiment of the present disclosure further provides a manufacturing method of a conductive structure, which includes: providing a substrate; and forming a conductive layer on the substrate; a part of the conductive layer is embedded in the substrate.

For example, in the manufacturing method provided by at least one embodiment of the present disclosure, a material of the substrate is nanocellulose with a two-dimensional planar mesh structure.

For example, in the manufacturing method provided by at least one embodiment of the present disclosure, a material of the conductive layer is a one-dimensional nanometer conductive material.

For example, in the manufacturing method provided by at least one embodiment of the present disclosure, the one-dimensional conductive material includes at least one selected from the group consisting of a conductive nanowire, a conductive nanotube and a conductive nanorod.

For example, in the manufacturing method provided by at least one embodiment of the present disclosure, forming the conductive layer on the substrate includes: forming a metal nanowire thin film with a first charge on the substrate; baking the metal nanowire thin film with the first charge; forming a metal nanowire thin film with a second charge on the metal nanowire thin film with the first charge; and baking the metal nanowire thin film with the second charge, wherein the first charge and the second charge are opposite charges.

For example, the manufacturing method provided by at least one embodiment of the present disclosure further includes doping a silver ion into the substrate.

### BRIEF DESCRIPTION OF THE DRAWINGS

In order to clearly illustrate the technical solutions of the embodiments of the present disclosure, the drawings of the embodiments will be briefly described in the following; it is obvious that the described drawings are only related to some embodiments of the present disclosure without constituting any limitation thereto.
FIG. 1 is a schematic view illustrating a structure of a substrate with an electrode provided thereon;
FIG. 2 is a schematic cross-sectional view illustrating a structure of a conductive structure provided by an embodiment of the present disclosure;
FIG. 3 is a schematic view illustrating an enlarged structure of an embedded overlap region provided by an embodiment of the present disclosure;
FIG. 4 is a schematic cross-sectional view illustrating a structure of another conductive structure provided by an embodiment of the present disclosure;
FIG. 5 is a schematic cross-sectional view illustrating a structure of a touch screen provided by an embodiment of the present disclosure;
FIG. 6 is a partial enlarged view of a surface of a first substrate away from a second substrate provided by an embodiment of the present disclosure;
FIG. 7 is a schematic cross-sectional view illustrating a structure of another touch screen provided by an embodiment of the present disclosure;
FIG. 8 is a schematic view illustrating an achievement of a touch function provided by an embodiment of the present disclosure;
FIG. 9 is a schematic cross-sectional view illustrating a structure of a touch display device provided by an embodiment of the present disclosure; and
FIG. 10 is a flowchart illustrating a manufacturing method of a conductive structure provided by an embodiment of the present disclosure.

### DETAILED DESCRIPTION

In order to make objects, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the described object is changed, the relative position relationship may be changed accordingly.

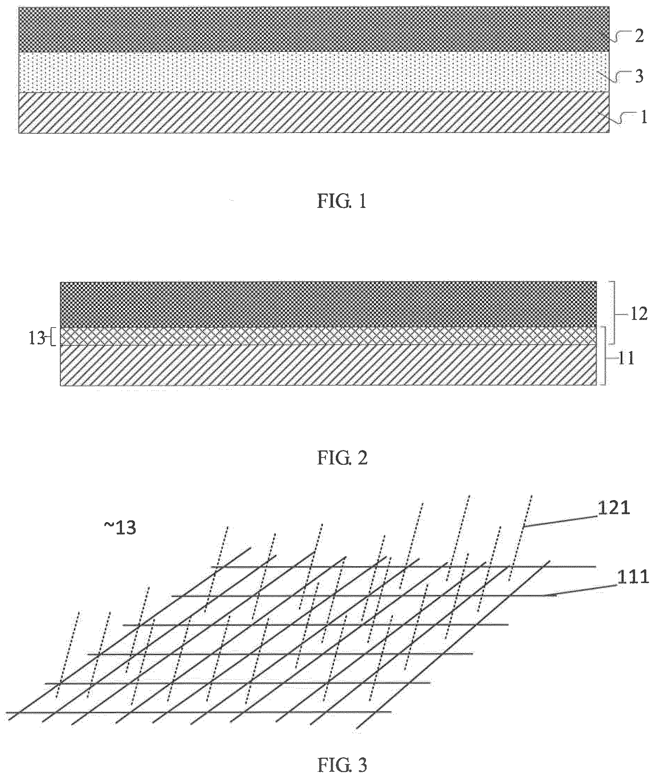

Generally, a rigid substrate used in manufacturing a touch screen includes an ordinary glass substrate, a quartz glass substrate, and a polymethyl methacrylate (PMMA) substrate, and a flexible substrate used in manufacturing a touch screen includes a thin film layer of polydimethylsiloxane (PDMS), a thin film layer of polyethylene terephthalate (PET), a thin film layer of polyethylene naphthalate (PEN), a thin film layer of polymethyl methacrylate (PMMA), and a thin film layer of polyvinylidene chloride (PVDC). When a conductive structure is formed on a base substrate made of the above materials, it is necessary to provide an adhesive layer between the base substrate and the conductive structure, so that the conductive structure and the base substrate can be well bonded. For example, FIG. 1 is a schematic view illustrating a structure of a substrate with an electrode provided thereon, and an adhesive layer 3 is arranged between a base substrate 1 and an electrode 2 to form a three-layered structure. However, in this case, the manufacturing method of the touch screen is more complicated due to an additional process for forming the adhesive layer. Moreover, the coated adhesive layer 3 may not be smooth, thus affecting flatness of the electrode 2; the adhesive layer 3 may also slip off the base substrate 1 so that the electrode 2 cannot be firmly bonded to the base substrate 1, thereby affecting a realization of a touch function of the touch screen.

At least one embodiment of the present disclosure provides a conductive structure, which includes a substrate and a conductive layer arranged on the substrate, and a part of the conductive layer is embedded in the substrate. By embedding a part of the conductive layer in the substrate, the conductive structure and the substrate can be well bonded, thus omitting a process for forming an adhesive layer, reducing a process complexity, and saving production cost, and avoiding a technical problem that a surface of a conductive structure is not smooth caused by an uneven thickness of an adhesive layer.

At least one embodiment of the present disclosure provides a conductive structure, for example, FIG. 2 is a schematic cross-sectional view illustrating a structure of a conductive structure provided by an embodiment of the present disclosure. As illustrated in FIG. 2, the conductive structure 10 includes a substrate 11; a conductive layer 12 arranged on the substrate 11; a part of the conductive layer 12 is embedded in the substrate 11. Thus, an embedded overlap region 13 is formed at an interface where the conductive layer 12 is in contact with the substrate 11. For example, a thickness of the embedded overlap region 13 is in a range from 10 nm to 30 nm, and for further example, the thickness of the embedded overlap region 13 is 10 nm, 20 nm or 30 nm. In the embedded overlap region 13, a part of the conductive layer 12 is embedded in the substrate, and an outer surface of the conductive layer 12 is exposed to an outer side (that is, a side facing a user), so as to achieve a normal touch function. The formation of the embedded overlap region enables a bonding between the conductive layer 12 and the substrate 11 to be tighter, avoiding the technical problem that the adhesive layer 3 in the three-layered structure formed by the base substrate 1, the electrode 2 and the adhesive layer 3 as illustrated in FIG. 1 is easily peeled off the base substrate 1.

For example, a material of the substrate 11 is nanocellulose, which is in a two-dimensional planar mesh structure. Nanocellulose has a layered structure, and after treatment, nanocellulose can obtain various properties, such as transparent or opaque, porous or completely non-pored, rough or smooth, flexible or rigid, as well as fragile or tough, etc. Nanocellulose may be treated under different conditions so as to form a layered structure meeting different requirements.

For example, a material of the conductive layer is a one-dimensional nanometer conductive material. Compared with a conductive material in other dimensions, the one-dimensional nanometer conductive material can be bonded with a substrate formed of nanocellulose more easily. One-dimensional nanometer conductive material can be embedded in the substrate with the two-dimensional planar mesh structure more easily to form a stable, embedded overlap region.

For example, the one-dimensional nanometer conductive material includes at least one selected from the group consisting of a conductive nanowire, a conductive nanotube and a conductive nanorod. For example, the conductive nanowire is a conductive metal nanowire including at least one selected from the group consisting of a silver nanowire, a gold nanowire and a copper nanowire. For example, the conductive nanotube may be a carbon nanotube. For example, the conductive nanorod may be a carbon nanorod.

It is hard for the usual conductive metal oxide, such as indium tin oxide, to be made into an electrode in a flexible display due to brittleness and high cost, and the electrode has a very high requirement on smoothness. One-dimensional nanometer conductive material in the embodiments of the present disclosure includes, but is not limited to, a flexible, bendable material such as conductive metal nanowire, carbon nanotube and carbon nanorod, etc. A slurry of the material described above is formed on a cellulose paper by a low-cost printing method, so as to form a flexible, conductive paper. Compared with a transparent nanocellulose paper, a thickness of conductive metal nanowire is very small, sufficient light can pass through the nanocellulose paper.

For example, the one-dimensional nanometer conductive material is in a dense mesh structure and is uniformly deposited on a surface of a nanocellulose paper. As the depositing amount of the one-dimensional nanometer conductive material on the nanocellulose paper increases, a surface resistance of the nanocellulose paper decreases sharply. For example, in the case where an amount of a carbon nanotube is 1.5 µg/cm², a surface resistance of the nanocellulose paper can be reduced to 300 Ω/cm² or less. In an embodiment of the present disclosure, a conductive structure with a surface resistance of less than 200 Ω/cm² is adopted to manufacture a touch screen and a touch display device. Because a part of the conductive metal nanowire, a part of the carbon nanotube, or a part of the carbon nanorod, etc. covers a surface of the cellulose paper to be in a dense mesh structure, and simultaneously another part of the conductive metal nanowire, another part of carbon nanotube, or another part of the carbon nanorod, etc. is embedded in the cellulose paper, it is possible to take both electrical conductivity and mechanical stability into account.

For example, an electrostatic interaction depositing technology may be adopted to allow a surface of conductive metal nanowire to carry a positive or negative charge by use of adsorption function between an electrolyte and the conductive metal nanowire (such as a hydrogen bond, a covalent bond, a van der waals force, or an electrostatic interaction). And then, another film layer is deposited interactively by the electrostatic action between the layers. Due to an action of an electrostatic force, the obtained thin-film is regular in structure, in a uniform dispersion, controllable on the number of layers, and has better conductivity, thereby meeting the need of flexible development of a device.

For example, the carbon nanotube and the carbon nanorod may be made by a conventional manufacturing process, without repeated here.

For example, FIG. 3 is a schematic view illustrating an enlarged structure of an embedded overlap region provided by an embodiment of the present disclosure, and as illustrated in FIG. 3, the one-dimensional nanometer conductive material 121 is embedded in nanocellulose 111 with two-dimensional planar mesh structure, so as to form an embedded overlap region 13. For example, the nanocellulose 111 with the two-dimensional planar mesh structure is formed by celluloses connected and intersected with each other in a horizontal direction and in a vertical direction. No micron-sized pore exists in the two-dimensional planar mesh structure, but only nano-sized pores are present, so that the one-dimensional nanometer conductive material is just embedded into the nano-sized pores, so as to form a stable structure.

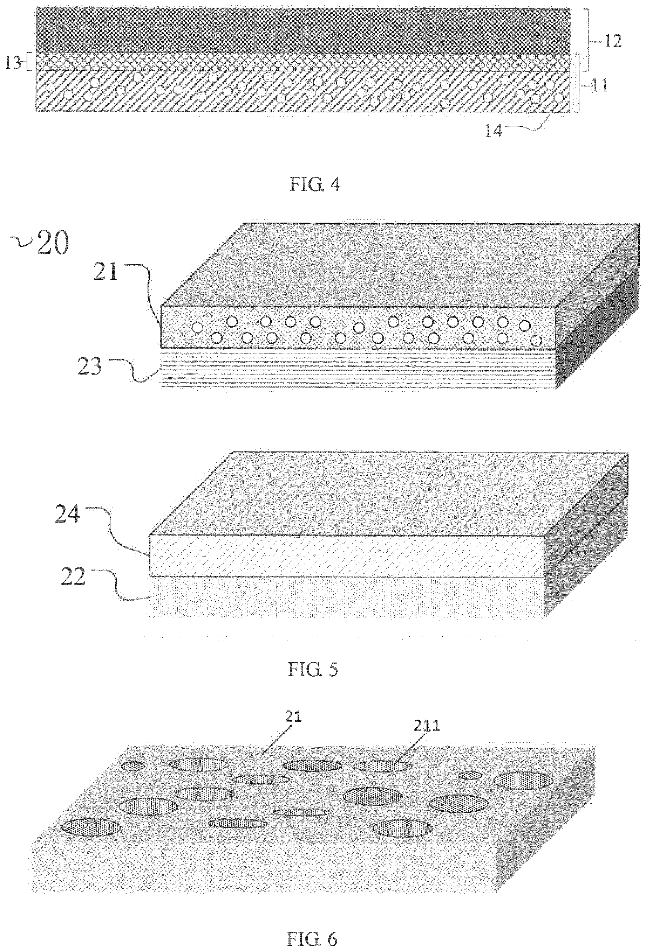

For example, after a conventional touch screen is touched many times, a large number of bacteria will breed on a surface of the touch screen, which will adversely affect the health of the user. Moreover, an antibacterial effectiveness of a general antibacterial method will decrease as the using time increases. In an embodiment of the present disclosure, a raw material of a substrate is doped with a silver ion, and the added silver ion would not affect a performance of the substrate. Besides, the silver ion is also employed to improve an antibacterial effect significantly, and an antibacterial property of a touch screen with the silver ion would not be weakened as the using time of the touch screen increases. For example, FIG. 4 is a schematic cross-sectional view illustrating a structure of still another conductive structure provided by an embodiment of the present disclosure. As illustrated in FIG. 4, the substrate 11 is doped with silver ions 14, and for example, the silver ions 14 are evenly dispersed in the substrate 11. Alternatively, in view of the fact that a middle region of a touch screen is touched at a higher frequency, and the middle region is more likely to breed a large number of bacteria, then a density of silver ions may be designed to gradually decrease from a center of the substrate to a periphery of the substrate.

For example, in an embodiment of the present disclosure, silver ions may be doped into the substrate by using the following method: mixing silver nitrate and polymethacrylic acid at a molar ratio of 4:1, and reacting at a room temperature to obtain a silver nanocluster with a diameter less than 2 nm, and immersing the cellulose paper formed above in an aqueous solution of the silver nanocluster for 10 hours, then performing a rinsing process with deionized water and performing a drying process by a press. The doped silver ion can emit a fluorescent wavelength of 632 nm.

At least one embodiment of the present disclosure further provides a touch screen, and for example, FIG. 5 is a schematic cross-sectional view illustrating a structure of a touch screen provided by an embodiment of the present disclosure. As illustrated in FIG. 5, the touch screen 20 includes a first substrate 21 and a second substrate 22 that are arranged opposite to each other, a first electrode 23 is provided on a side of the first substrate 21 close to the second substrate 22; a second electrode 24 is provided on a side of the second substrate 22 close to the first substrate 21, and a part of the first electrode 23 is embedded in the first substrate 21. For example, it may also be the case that a part of the second electrode 24 is embedded in the second substrate 22. For example, it may also be the case that a part of the first electrode 23 is embedded in the first substrate 21 and a part of the second electrode 24 is embedded in the second substrate 22.

In the touch screen 20, by embedding or inserting a part of the first electrode 23 in the first substrate 21, and/or embedding or inserting a part of the second electrode 24 in the second substrate 22, the electrode and a corresponding substrate including the electrode can be well bonded, thereby omitting a process for forming an adhesive layer, reducing process complexity, saving manufacturing cost, and avoiding the technical problem that a surface of at least one selected from the group consisting of the first substrate and the second substrate is not smooth caused by an uneven thickness of an adhesive layer.

For example, a material of each of the first substrate 21 and the second substrate 22 includes nanocellulose having a two-dimensional planar mesh structure. For example, regarding properties of the nanocellulose, reference may be made to the relevant description as described above, and details are omitted here.

For example, a surface of the first substrate 21 away from the second substrate has a concave-convex structure. For example, FIG. 6 is a partial enlarged view illustrating a surface of the first substrate away from a second substrate, and as illustrated in FIG. 6, the surface of the first substrate 21 away from the second substrate is uneven, and has recessed structures 211 evenly distributed or unevenly distributed. For example, a sectional shape of the recessed structures 211 may be a regular shape such as an ellipse, a circle, or the like, and may also be other irregular shapes. The concave-convex structure is employed to raise a haze of the first substrate 21 and prevent a dizzy feeling of a viewer when the user views the screen in the case where the touch screen is used in combination with a display panel. For example, the first substrate 21 may act as a touch cover plate of the touch screen.

For example, a material of each of the first substrate 21 and the second substrate 22 is a one-dimensional nanometer conductive material. Compared with a conductive material in other dimensions, the one-dimensional nanometer conductive material can be bonded with the first substrate 21 and/or the second substrate 22 formed of nanocellulose more easily. The one-dimensional nanometer conductive material can be embedded in a substrate with a two-dimensional planar mesh structure more easily to form a stable, embedded overlap region. Regarding relevant specific description of the one-dimensional nanometer conductive material, reference may be made to the relevant description as described above, and details are omitted here.

For example, at least one of the first substrate and the second substrate is doped with a silver ion, which can play a role of killing bacteria. For example, the first substrate 21 is a touch cover plate, which is doped with a silver ion. When the touch cover plate is pressed by a user many times, a surface of the touch cover plate will breed a large number of bacteria, which will adversely affect the health of the user. Moreover, an antibacterial effectiveness of a general antibacterial method will decrease as the using time increases. A silver ion is doped into the first substrate 21 so that an antibacterial effectiveness can be significantly improved and an antibacterial property will not be weakened as the service time increases.

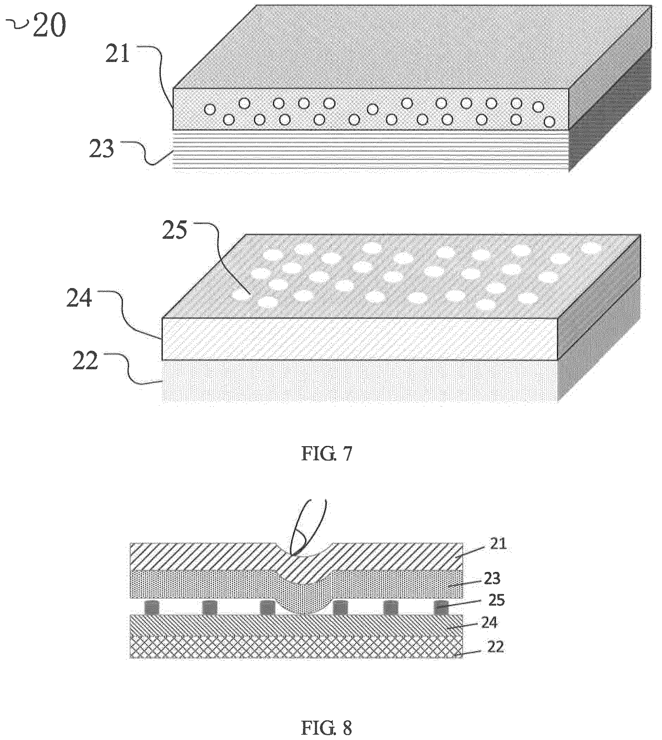

For example, FIG. 7 is a schematic cross-sectional view illustrating a structure of another touch screen provided by an embodiment of the present disclosure. As illustrated in FIG. 7, the touch screen 20 includes a first substrate 21 and a second substrate 22 that are opposite to each other, a first electrode 23 is provided on a side of the first substrate 21 close to the second substrate 22; a second electrode 24 is provided on a side of the second substrate 22 close to the first substrate 21, and a part of the first electrode 23 is embedded in the first substrate 21. For example, it may also be the case that a part of the second electrode 24 is embedded in the second substrate 22. For example, it may also be the case that a part of the first electrode 23 is embedded in the first substrate 21, and a part of the second electrode 24 is embedded in the second substrate 22. A plurality of spacers 25 are provided between the first substrate 21 and the second substrate 22.

For example, the spacers 25 are Post Spacers (PS) and have the properties of transparency and insulation. The post spacers may be evenly distributed between the first substrate 21 and the second substrate 22, and the spacers 25 substantially have the same height, so as to allow the first electrode 23 to be insulated from the second electrode 24, and meanwhile to maintain a thickness between the first substrate 21 and the second substrate 22 uniform. Thus, the first substrate 21 is smooth, and the touch function is realized more accurately.

For example, FIG. 8 is a schematic view illustrating an achievement of a touch function provided by an embodiment of the present disclosure. As illustrated in FIG. 8, when a touch function needs to be realized, a user may press a touch screen, so as to achieve a contact of a first electrode 23 with a second electrode 24. Thus, accurate positioning is achieved.

For example, a material of the spacer 25 may be a photosensitive resin, or a non-photosensitive resin.

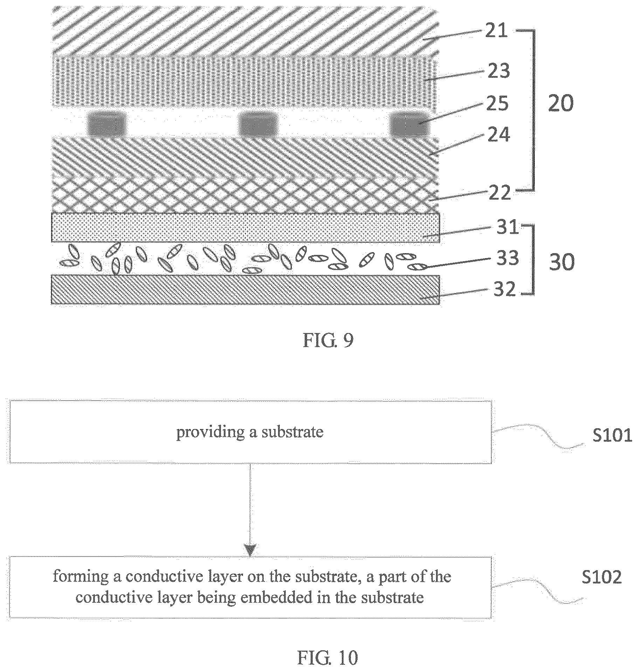

For example, the above touch screen may also be used in any electronic device that can respond to a touch of a user, such as a smart phone, a personal digital assistant (PDA), a tablet computer, a notebook computer, a desktop computer or a vending machine. At least one embodiment of the present disclosure further provides a touch display device, and for example, FIG. 9 is a schematic cross-sectional view illustrating a structure of a touch display device provided by an embodiment of the present disclosure. As illustrated in FIG. 9, the touch display device includes any of the touch screens 20 as described above and a display panel 30.

For example, the display panel may be a liquid crystal display panel, and may also be an electroluminescent display panel.

For example, FIG. 9 will be described with reference to the case where the display panel is a liquid crystal display panel, by way of example, and the display panel 30 includes a color filter substrate 31 and an array substrate 32 arranged opposite to each other, and a liquid crystal layer 33 is provided between the color filter substrate 31 and the array substrate 32. Touch and display functions can be realized by the touch display device simultaneously. For a purpose of clarity, in the liquid crystal touch display device of FIG. 9, other components such as polarizers, thin film transistors and so on are not illustrated in the figure.

For example, a 4-wire resistive touch screen includes a first resistive layer and a second resistive layer. The first resistive layer has a vertical bus line at a left edge of the touch screen and a vertical bus line at a right edge of the touch screen, that is, bus lines in an X-axis direction are formed; the second resistive layer has a horizontal bus line at a bottom edge of the touch screen and a horizontal bus line at a top edge of the touch screen, that is, bus lines in a Y-axis direction are formed. A working principle of the resistive touch screen is that, when measuring in the X axis direction, the bus line at the left edge is input with a voltage of 0V, the bus line at the right edge is input with a voltage of V_{REF}, and meanwhile the bus line at the top or bottom edge is connected with an analog to digital converter (ADC), and a voltage value of the X-axis direction can be measured when the first resistive layer is in contact with the second resistive layer, thus obtaining a coordinate value of the X-axis direction; when measuring in the Y-axis direction, it is necessary that the bus line at the bottom edge is input with a voltage of OV and the bus line at the top edge is input with a voltage of V_{REF}, and meanwhile the bus line at the left or right edge is connected with an input terminal of the ADC, and a voltage value of the Y-axis direction can be measured when the first resistive layer is in contact with the second resistive layer, thus obtaining a coordinate value of the Y-axis direction.

At least one embodiment of the present disclosure further provides a manufacturing method of a conductive structure, and for example, FIG. 10 is a flowchart illustrating a manufacturing method of a conductive structure provided by an embodiment of the present disclosure. As illustrated in FIG. 10, the manufacturing method includes the following steps.

S101: the method includes providing a substrate.

For example, a material of the substrate includes nanocellulose, which is in a two-dimensional planar mesh structure. Nanocellulose has a layered structure, and after treatment, nanocellulose can obtain various properties, such as transparent or opaque, porous or completely non-pored, rough or smooth, flexible or rigid as well as fragile or tough, etc. Nanocellulose may be treated under different conditions so as to form a layered structure meeting different requirements.

For example, the following is a processing method in which a raw material is used for forming a substrate with high transparency, high smoothness and high flexibility. The method includes: firstly, dissolving fibers of wood pulp in water, so that the fibers of wood pulp are dispersed fully in the water; then adding the fibers of wood pulp into a strong oxidation system formed of tetramethylpiperidine, hypochlorite salt and bromide salt, so as to pretreat the fibers of wood pulp. For example, in the strong oxidation system, bromide salt has a mass percentage of 8 to 14 wt%, tetramethylpiperidine has a mass percentage of 1 to 2 wt%, and hypochlorite salt has a mass percentage of 84 to 92 wt%. The method further includes carrying out a whole reaction at a room temperature for 4 hours, and maintaining a pH value at 9.5 to 11 by dripping hypochlorite salt in the reaction. After a completion of the reaction, the method further includes adjusting a mass percentage of a slurry to be 0.1 to 0.3 wt% with distilled water, next, performing a homogenizing treatment on the above slurry by using a microfluidizer with a radio frequency of 10, 000 to 30, 000 psi, and filtering the slurry subjected to the homogenizing treatment and drying by a press, to produce a cellulose paper. The cellulose paper formed by pretreatment of the above-mentioned strong oxidation system and treatment of the microfluidizer has a very high packing density of cellulose, and the reason is that, when the microfluidizer is used for treatment, a hollow structure of celluloses may collapse seriously and flat-shaped celluloses are formed, and tiny celluloses produced in this process further fill in internal pores, so that almost no micron pore is visible at a surface of cellulose paper, the scattering of cellulose paper to external light is reduced, and then high transparency of the cellulose paper is achieved. A surface of the cellulose paper formed by using the above-mentioned method has a concave-convex surface formed by overlapping of celluloses, thus improving a haze of cellulose paper. In addition, the cellulose paper has flexibility, and can be used to produce a flexible substrate.

S102: the method includes forming a conductive layer on the substrate, and a part of the conductive layer is embedded in the substrate.

For example, in a manufacturing method provided by at least one embodiment of the present disclosure, a material of the conductive layer is a one-dimensional nanometer conductive material, and compared with a conductive material in other dimensions, the one-dimensional nanometer conductive material can be bonded with the substrate formed of the cellulose paper more easily. One-dimensional nanometer conductive material can be embedded in the substrate with the two-dimensional planar mesh structure more easily to form a stable, embedded overlap region. Regarding relevant specific description of the one-dimensional nanometer conductive material, reference may be made to the relevant description as described above, and details are omitted here.

For example, with reference to an example in which a material of the conductive layer is metal nanowire, a formation of the conductive layer on the substrate includes the following steps:
Step (1): preparing two identical suspension solutions A and B of metal nanowire; one of them (i.e., A) is mixed with a cationic electrolyte so as to cause a surface of the metal nanowire therein to carry a positive charge, and the other one (i.e., B) is fully mixed with an anionic electrolyte so as to cause a surface of the metal nanowire therein to carry a negative charge;
Step (2): adopting the solution A or B obtained by step (1), preparing a metal nanowire thin film with a positive or negative charge on the above-formed cellulose paper firstly by way of spin coating, spray coating, blade coating or dip coating, and then performing a fully rinsing process and a baking process;
Step (3): adopting the solution B or A obtained by step (1), preparing a metal nanowire thin film with a charge opposite to the layer of metal nanowire thin film formed in step (2) on a top surface of the thin film that is prepared in step 2 by adopting solution A or B obtained by step (1), by way of spin coating, spray coating, blade coating or dip coating, and then performing a fully rinsing process and a baking process;
Step (4): by repeating steps 2 and 3 sequentially, obtaining a multilayered, conductive metal nanowire.

In step (4), the number of times step 2 and step 3 are repeated is 1 to 20, and a concentration of the prepared suspension solution of conductive metal nanowire is 0.01 mg/ml to 10 mg/ml; a baking temperature is 50 to 200°C, and a baking time is one minute to 100 minutes.

For example, in an embodiment of the present disclosure, the suspension solution of conductive metal nanowire is such a solution that the metal nanowire described above is dispersed in at least one solvent selected from the group consisting of deionized water, ethanol, ethylene glycol, and acetone.

For example, in an embodiment of the present disclosure, the cationic electrolyte includes polyelectrolytes of quaternary phosphate salt type, quaternary amine salt type, and tertiary sulfosalt type, primary, secondary and tertiary fatty amine salts combined with polyoxyethylene, heterocyclic cationic surfactants with amine radical, quaternary amine radical, imidazole and triazine.

For example, the cationic electrolyte may be tetradecyl trimethyl ammonium bromide, cetyl trimethyl ammonium bromide, poly (diallyl dimethyl ammonium chloride), ethylenediamine, diethylene diamine, triethylene diamine, 2-alkyl imidazoline, cationic polyacrylamide, ethanolamine, dodecyl trimethyl ammonium chloride, dodecyl trimethyl ammonium bromide, tetradecyl trimethyl ammonium chloride, tetradecyl trimethyl ammonium bromide, cetyl trimethyl ammonium chloride, octadecyl trimethyl ammonium chloride, dodecyl dimethyl benzyl ammonium chloride, or octaalkyl trimethyl ammonium chloride.

For example, in an embodiment of the present disclosure, the anionic electrolyte includes at least one selected from the group consisting of polyacrylic acid, polystyrene sulfonic acid, polyethylene sulfonic acid, poly(methacrylic acid), polyethylene phosphoric acid, and anionic surfactants of carboxylate, sulfate, sulfonate and a phosphate anionic surfactant, and an alkyl group of the surfactant contains 6 to 300 carbon atoms.

For example, the anionic electrolyte may be halate, acetate, citrate, lactate, glycollate, phosphate, nitrate, sulfate, alkyl sulfate, alkylbenzene sulfonate radical, alkyl phosphate, amino acid salt, or a combination thereof.

Regarding the manufacturing method of the conductive structure, by using an interaction between a surface of a metal nanowire and an electrolyte, the metal nanowire carry an opposite charge, and then layers are deposited interactively under an action of an electrostatic force. Owing to the fact that layers are bonded by the action of the electrostatic force therebetween, an interlayer packing of the resultant thin film is closer, a contact between nanowires is better, thereby reducing a contact resistance of the resultant thin film effectively, obtaining a resultant thin film having considerably improved conductive capacity while having a good transmittance. Moreover, for the manufacturing method, it is simple to operate, has no requirement for substrate, and has high repeatability, its experimental condition is easy to control, and can meet the need of flexible development to be applied to a large-scale production.

For example, by embedding a part of a conductive layer in a substrate, the conductive structure and the substrate can be well bonded, thereby saving a process for forming an adhesive layer, reducing process complexity, saving production cost, and avoiding the technical problem that a surface of the conductive structure is not smooth caused by an uneven thickness of an adhesive layer.

For example, the manufacturing method provided by at least one embodiment of the present disclosure further includes doping silver ions into a substrate.

For example, in an embodiment of the present disclosure, silver ions may be doped in a substrate by using the following method: mixing silver nitrate and polymethacrylic acid at a molar ratio of 4:1, and reacting at a room temperature to obtain a silver nanocluster with a diameter less than 2 nm, and immersing the cellulose paper formed above in an aqueous solution of the silver nanocluster for 10 hours, then performing a rinsing process with deionized water and performing a drying process by a press.

For example, the doped silver ion can emit a fluorescent wavelength of 632 nm.

For example, the silver ions are evenly dispersed in the substrate. Alternatively, in view of the fact that a middle region of a touch screen is touched at a higher frequency, and the middle region is more likely to breed a large number of bacteria, then a density of silver ions may be designed to gradually decrease from a center of the substrate to a periphery of the substrate. In an embodiment of the present disclosure, a raw material of a substrate is doped with silver ions, and addition of the silver ions would not affect a performance of the substrate. Besides, the antibacterial effect can also be improved significantly by the silver ions, and the antibacterial property will not be weakened as the using time increases.

The embodiments of the present disclosure provides a conductive structure and a manufacturing method thereof, a touch screen and a touch display device, which have at least one of the following beneficial effects.
(1) In the conductive structure provided by at least one embodiment of the present disclosure, an embedded overlap region is formed between a conductive layer and a substrate. In the embedded overlap region, a part of the conductive layer is embedded in the substrate, and an outer surface of the conductive layer is exposed to an outer side, so as to achieve a normal touch function. The embedded overlap region enables a bonding between the conductive layer and the substrate to be tighter, thereby avoiding the technical problem that an adhesive layer is easily peeled off a base substrate.
(2) For the conductive structure provided by at least one embodiment of the present disclosure, the process for forming an adhesive layer is omitted, the process complexity is reduced, the production cost is saved, and the technical problem that a surface of the conductive structure is not smooth caused by an uneven thickness of an adhesive layer is also avoided.
(3) For the conductive structure provided by at least one embodiment of the present disclosure, by doping silver ions in a raw material of a substrate, an antibacterial effect can also be improved significantly by the silver ions and meanwhile an addition of the silver ions would not affect a performance of the substrate, and an antibacterial property would not be weakened as the using time increases.

The following should be explained.
(1) The drawings of the embodiments of the present disclosure relate only to the structures related to the embodiments of the present disclosure, and other structures may refer to the common design(s).
(2) For the purpose of clarity only, in accompanying drawings for illustrating the embodiment(s) of the present disclosure, a layer or a region may be enlarged. It should be understood that, in the case in which a component such as a layer, a film, a region, a substrate or the like is referred to be "on" or "under" another component, it may be directly on or under the another component or a component is interposed therebetween.
(3) The features of the same embodiment and different embodiments of the present disclosure may be combined with each other without conflict.

The above are only specific implementations of the present disclosure, and the protection scope of the present disclosure is not limited thereto. The protection scope of the present disclosure should be based on the protection scope of the claims.

## Claims

1. A conductive structure, comprising:
a substrate; and
a conductive layer arranged on the substrate,
wherein a part of the conductive layer is embedded in the substrate.

2. The conductive structure according to claim 1, wherein a material of the substrate is nanocellulose with a two-dimensional planar mesh structure.

3. The conductive structure according to claim 1 or 2, wherein a material of the conductive layer is a one-dimensional nanometer conductive material.

4. The conductive structure according to claim 3, wherein the one-dimensional nanometer conductive material is embedded in the nanocellulose with the two-dimensional planar mesh structure to form an embedded overlap region.

5. The conductive structure according to claim 2, wherein the substrate is doped with a silver ion.

6. A touch screen, comprising:
a first substrate, a first electrode being provided on a side of the first substrate close to the second substrate; and
a second substrate opposite to the first substrate, a second electrode being provided on a side of the second substrate close to the first substrate,
wherein a part of the first electrode is embedded in the first substrate and/or a part of the second electrode is embedded in the second substrate.

7. The touch screen according to claim 6, wherein a material of at least one selected from the group consisting of the first substrate and the second substrate is nanocellulose with a two-dimensional planar mesh structure.

8. The touch screen according to claim 7, wherein a surface of the first substrate away from the second substrate has a convex-convave structure.

9. The touch screen according to claim 6, wherein a material of at least one selected from the group consisting of the first electrode and the second electrode is a one-dimensional nanometer conductive material.

10. The touch screen according to claim 9, wherein the one-dimensional conductive material includes at least one selected from the group consisting of a conductive nanowire, a conductive nanotube, and a conductive nanorod.

11. The touch screen according to any of claims 6 to 10, wherein at least one selected from the group consisting of the first substrate and the second substrate is doped with a silver ion.

12. The touch screen according to claim 11, wherein a plurality of spacers are arranged between the first substrate and the second substrate.

13. A touch display device, comprising:
a display panel; and
the touch screen according to any of claims 6 to 12.

14. A manufacturing method of a conductive structure, comprising:
providing a substrate; and
forming a conductive layer on the substrate,
wherein a part of the conductive layer is embedded in the substrate.

15. The manufacturing method according to claim 14, wherein a material of the substrate is nanocellulose with a two-dimensional planar mesh structure.

16. The manufacturing method according to claim 15, wherein a material of the conductive layer is a one-dimensional nanometer conductive material.

17. The manufacturing method according to claim 16, wherein the one-dimensional conductive material includes at least one selected from the group consisting of a conductive nanowire, a conductive nanotube and a conductive nanorod.

18. The manufacturing method according to claim 14, wherein forming the conductive layer on the substrate includes:
forming a metal nanowire thin film with a first charge on the substrate;
baking the metal nanowire thin film with the first charge;
forming a metal nanowire thin film with a second charge on the metal nanowire thin film with the first charge; and
baking the metal nanowire thin film with the second charge, wherein the first charge and the second charge are opposite charges.

19. The manufacturing method according to any of claims 14 to 18, further comprising doping a silver ion into the substrate.
